# EUROPÄISCHE PATENTSCHRIFT

(11) **EP 0 972 657 B1**
(45) Veröffentlichungstag und Bekanntmachung des Hinweises auf die Patenterteilung: **21.05.2003**
(21) Anmeldenummer: 99112892.7
(22) Anmeldetag: 03.07.1999
(51) Int. Cl.: B60B 17/00

(54) **Rad für Schienenfahrzeuge**
Wheel for rail vehicles
Roue pour véhicules ferroviaires

(30) Priorität: 16.07.1998 DE 19831926
(43) Veröffentlichungstag der Anmeldung: 19.01.2000
(73) Patentinhaber: Prasser, Josef, 73252 Lenningen (DE)
(72) Erfinder: Prasser, Josef, 73252 Lenningen (DE)
(74) Vertreter: Vetter, Hans, Dipl.-Phys. Dr.

(56) Entgegenhaltungen:
- EP-A- 0 733 493
- DE-A- 3 328 321
- DE-A- 19 743 893

## Beschreibung

Die Erfindung betrifft ein Rad für Schienenfahrzeuge, mit einer an einer Radachse fixierbaren Radkörperanordnung, die am Radumfang koaxial von einem Radreifen umgriffen wird, der zum Abrollen auf Schienen ausgebildet ist, wobei Mittel zur Verhinderung einer axialen Verschiebung des Radreifens auf der Radköperanordnung vorgesehen sind.

Derartige Räder sind beispielsweise aus der gattungsgemässen DE-A-197 43 893 für ICE-Züge bekannt, wobei zwischen dem Radreifen und der Radköperanordnung gummielastische Federelemente vorgesehen sind, die ein komfortables Abrollen solcher Räder auf den Schienen gewährleisten. Durch das Abrollen wird die Abrollfläche des Radreifens abgenutzt, sodass sie in bestimmten Abständen nachbearbeitet, insbesondere abgedreht wird. Nach mehreren Nachbearbeitungszyklen wird dann der Radreifen ersetzt, das heißt, die Radkörperanordnung wird beibehalten und mit einem neuen Radreifen versehen. Die bekannte Anordnung besitzt zwar stufenartig ineinander greifende ringartig umlaufende Bereiche, diese verhindern jedoch lediglich eine axiale Verschiebung des Radreifens auf der Radkörperanordnung, können jedoch beim Bruch des Radreifens dessen radiale Bewegung nicht verhindern, sodass bei einem Riss in Radreifen, licherweise in einer Ebene durch die Drehachse des Rads verläuft, dieser Radreifen infolge der sehr hohen Wechselbelastung bei den auftretenden hohen Geschwindigkeiten vollständig reißt und sich von der Radkörperanprdnung ablöst. Da das Rad dann keine Seitenführung auf den Schienen mehr besitzt, besteht die Gefahr von Entgleisungen des oder der Schienenfahrzeuge.

Es ist zwar ebenfalls bekannt, massive, einstückige Räder für Schienenfahrzeuge zu verwenden, bei denen das Problem eines Bruchs des Radreifens nicht mehr auftritt, jedoch kann dann eine komfortable, gummielastische Federung im Rad nicht erreicht werden, und zum anderen muss nach mehrmaliger Laufflächenbearbeitung das gesamte Rad ausgewechselt werden, was erhebliche Kosten mit sich bringt.

Eine Aufgabe der vorliegenden Erfindung besteht somit darin, ein Rad für Schienenfahrzeuge der eingangs genannten Gattung mit einem Radreifen zu schaffen, der sich auch bei einem eventuellen Bruch nicht mehr von der Radkörperanordnung lösen kann.

Diese Aufgabe wird erfindungsgemäß dadurch gelöst, dass zur Verhinderung einer radial nach außen gerichteten Bewegung des Radreifens dieser und die Radkörperanordnung ringartig umlaufende Bereiche aufweisen, die in axialer Richtung ineinander greifen und sich in radialer Richtung hintergreifen.

Der Vorteil des erfindungsgemäßen Rads besteht insbesondere darin, dass selbst im Falle eines Bruches des Radreifens in einer Ebene durch die Raddrehachse die beiden Bereiche des Radreifens zu beiden Seiten des Bruches an einer radial nach außen gerichteten Bewegung durch die ineinander greifenden, ringartig umlaufenden Bereiche gehindert werden. Diese ringartig umlaufenden Bereiche halten den gebrochenen Radreifen an der Radkörperanordnung und nehmen die Zentrifugalkräfte auf. Selbst im unwahrscheinlichen Fall mehrerer solcher Brüche werden die einzelnen Bruchstücke des Radreifens durch die ringartig umlaufenden Bereiche an der Radkörperanordnung gehalten, sodass ein Entgleisen des Schienenfahrzeugs wirksam verhindert wird. Solche Brüche sind akustisch oder durch Messungen feststellbar, sodass der gebrochene Radreifen, der sich immer noch an der Radkörperanordnung befindet, ausgetauscht werden kann, bevor ein Unglück passiert.

Durch die in den Unteransprüchen aufgeführten Maßnahmen sind vorteilhafte Weiterbildungen und Verbesserungen des im Anspruch 1 angegebenen Rads möglich.

Zur Ermöglichung einer einfachen und schnellen Montage des Radreifens ist die Radkörperanordnung wenigstens zweiteilig ausgebildet, wobei die Radkörperteile lösbar miteinander verbunden, insbesondere miteinander verschraubbar sind. Dabei ist wenigstens eines, vorteilhafter jedoch jedes Radkörperteil mit einem oder mehreren, ringartig umlaufenden Bereichen versehen, der oder die axial einen oder mehrere entsprechende, ringartig umlaufende Bereiche des Radreifens hintergreifen. Eine höhere Zahl solcher ringartig umlaufender Bereiche erhöht zusätzlich die Sicherheit.

Die ringartig umlaufenden Bereiche sind an wenigstens einer Radaußenseite und/oder im Inneren des Rades im mittleren Bereich angeordnet, vorzugsweise paarweise symmetrisch, um bei einem Bruch die auftretenden Kräfte gleichmäßig aufnehmen zu können.

In einer bevorzugten Ausführung ist ein erstes Radkörperteil als an der Radachse fixierbarer Radhauptkörper und wenigstens ein zweites Radkörperteil als axial am ersten Radkörperteil aufschiebbarer ein- oder mehrteiliger Haltering ausgebildet. Dabei ist das als Haltering ausgebildete zweite Radkörperteil zweckmäßigerweise durch einen Kranz von Halteschrauben am ersten Radkörperteil fixiert.

Zur Verhinderung einer axialen Verschiebung des Radreifens sind die Radkörperteile und gegenüberliegende Flächen des Radreifens als zur axialen Richtung im wesentlichen symmetrisch abgewinkelte Schrägflächen ausgebildet, wobei vorzugsweise zwischen dem Radreifen und den Radkörperteilen gummielastische Dämpfungs- bzw. Federelemente angeordnet sind, und wobei die ringartig umlaufenden Bereiche durch einen eine elastische Relativbewegung zulassenden Spalt voneinander getrennt sind, so daß sie erst im Falle eines Bruchs miteinander in Anlage gelangen. Durch die gummielastischen Federelemente, die zweckmäßigerweise als Ringbänder oder Einzelsegmente ausgebildet sind, ist ein komfortables Abrollen und eine leichte Montage gewährleistet

Zwei Ausführungsbeispiele der Erfindung sind in der Zeichnung dargestellt und in der nachfolgenden Beschreibung näher erläutert. Es zeigen:
- Fig. 1: eine Teilschnittdarstellung eines Rads für Schienenfahrzeuge in einer Schnittebene durch die Raddrehachse als erstes Ausführungsbeispiel der Erfindung, wobei ineinandergreifende, ringartig umlaufende Bereiche an den beiden Radaußenseiten angeordnet sind, und
- Fig. 2: eine entsprechende Darstellung eines zweiten Ausführungsbeispiels der Erfindung, bei dem ringartig umlaufende Bereiche im Inneren des Rades in dessen mittlerem Bereich symmetrisch angeordnet sind.

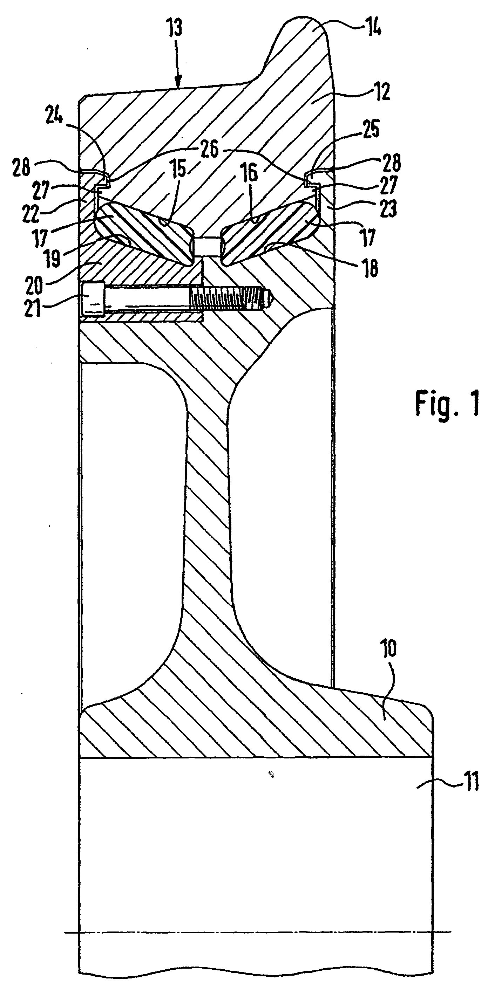

Das in Fig. 1 in einer Teilschnittdarstellung dargestellte erste Ausführungsbeispiel eines Rads für Schienenfahrzeuge weist einen Radhauptkörper 10 auf, der eine zentrale Durchgangsbohrung 11 zur Aufnahme einer nicht dargestellten Radachse besitzt. Der Radhauptkörper 10 ist dabei auf die Radachse aufgeschrumpft, aufgeschraubt, aufgeschweißt oder in einer anderen bekannten Weise befestigt. Der Radhauptkörper 10 wird an seinem Radumfang koaxial von einem Radreifen 12 umgriffen, der eine Lauffläche 13 zum Abrollen auf nicht dargestellten Schienen und einen einstückig angeformten Führungsring 14 besitzt. Die zum Radhauptkörper 10 weisende Innenseite des Radreifens 12 besitzt zwei von der Radmitte aus radial schräg nach außen sich erstreckende Anlageflächen 15, 16, die jeweils über ringbandförmige, gummielastische Federelemente 17 an entsprechenden, radial schräg nach außen verlaufenden Anlageflächen 18, 19 eines Druckrings bzw. Halterings 20 und des Radhauptkörpers 10 anliegen. Der Haltering 20 ist seitlich in eine entsprechende ringförmige Ausnehmung des Radhauptkörpers 10 eingesetzt und mittels eines Kranzes von Halteschrauben 21 am Radhauptkörper 10 fixiert. Von den Halteschrauben 21 ist in Fig. 1 nur eine erkennbar.

Zur Montage werden zunächst bei abgenommenem Haltering 20 der Radreifen 12 und die Federelemente 17 seitlich aufgeschoben, wonach dann der Haltering 20 eingesetzt und mittels der Halteschrauben 21 verschraubt wird. Die schrägen Anlageflächen 15, 16 bzw. 18, 19 dienen als Mittel zur Verhinderung einer axialen Verschiebung des Radreifens 12 auf dem Radhauptkörper 10, mit Ausnahme einer geringfügigen elastischen Bewegung auf Grund der Elastizität der Federelemente 17. Die bisherige Beschreibung trifft auch auf bekannte Räder für Schienenfahrzeuge zu, wie sie beispielsweise in ICE-Zügen verwendet werden.

Abweichend von bekannten Rädern besitzen der Haltering 20 und der Radhauptkörper 10 jeweils an den beiden gegenüberliegenden Außenseiten des Rads einen sich radial nach außen erstreckenden und den Radreifen 12 überlappenden, ringförmigen Vorsprung 22, 23, der an seinem radial äußeren Ende jeweils einen sich zum Rad-Inneren hin erstreckenden, ringförmigen Bereich 24, 25 besitzt. Diese ringförmigen Bereiche 24, 25 greifen dabei in Ringnuten 26 des Radreifens 12 ein und hintergreifen dabei sich axial nach außen erstreckende, ringförmige Bereiche 27 des Radreifens 12. Durch dieses radiale Ineinandergreifen bzw. Hintergreifen der ringförmigen Bereiche 24, 25 einerseits und der ringförmigen Bereiche 27 andererseits wird eine radial nach außen gerichtete Bewegung des Radreifens 12 auch bei einem Bruch in der Bildebene von Fig. 1 oder mehreren Brüchen, die den Radreifen 12 in teilkreisförmige Bruchstücke zerlegen, sicher verhindert, so daß entsprechend ein Entgleisen des Zuges verhindert wird. Auch bei einem oder mehreren solchen Brüchen behält das Rad quasi gewisse Notlaufeigenschaften.

Es versteht sich, daß die ineinandergreifenden Bereiche 24, 25 und 27 durch Spalte 28 voneinander beabstandet sind, die so bemessen sind, daß bei einer elastischen Bewegung des Radreifens 12 auf dem Radhauptkörper 10 infolge der Elastizität der Federelemente 17 eine gegenseitige Berührung der ringförmigen Bereiche 24, 25, 27 im intakten Zustand des Radreifens 12 verhindert wird.

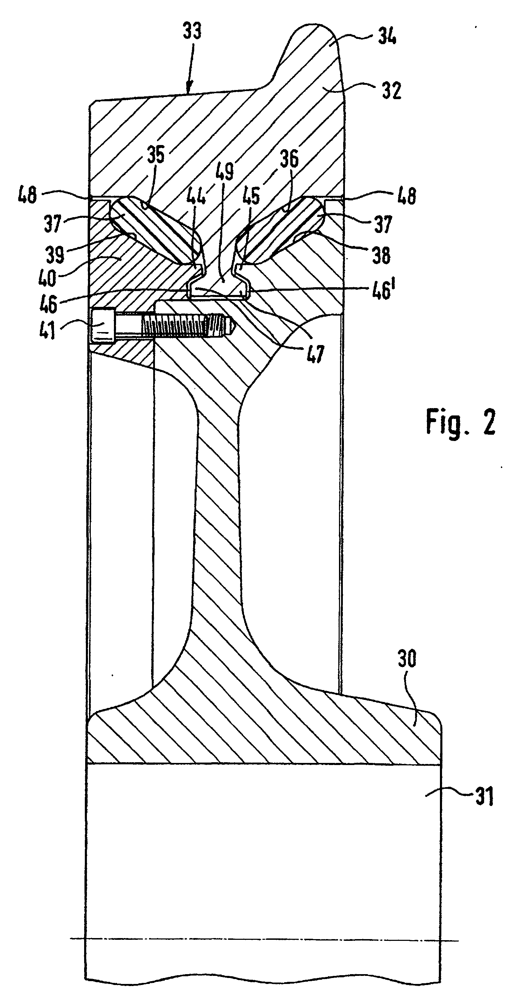

Das in Fig. 2 dargestellte zweite Ausführungsbeispiel entspricht weitgehend dem ersten Ausführungsbeispiel. Sich in ihrer Funktion entsprechende ähnliche Bauteile sind mit Bezugszeichen versehen, die gegenüber dem ersten Ausführungsbeispiel um die Zahl 20 erhöht sind. Variationen in der individuellen Formgestaltung werden nur dann besonders erwähnt, wenn sie für den Kern der vorliegenden Erfindung von besonderer Bedeutung sind.

Beim zweiten Ausführungsbeispiel entfallen die ringförmigen Bereiche 24, 25, 27 und die Ringnuten 26 an den beiden Außenseiten des Rads. Dafür erstreckt sich von der dem Radhauptkörper 30 zugewandten Innenseite des Radreifens 32 aus ein ringförmiger Vorsprung 49 radial zur Drehachse hin, der an seinem freien Ende zwei sich axial in die entgegengesetzten Richtungen erstreckende, ringförmige Bereiche 47 besitzt. Diese greifen axial in zwei Ringnuten 46, 46' ein, von denen die eine Ringnut 46 zwischen dem Haltering 40 und dem Radhauptkörper 30 gebildet wird und von denen die andere Ringnut 46' in den Radhauptkörper 30 eingeformt ist. Die ringförmigen Bereiche 47 werden dabei einerseits von einem am Haltering 40 angeformten ringförmigen Bereich 44 und andererseits von einem am Radhauptkörper 30 angeformten ringförmigen Bereich 45 radial hintergriffen. Hierdurch tritt eine ähnliche Wirkung wie beim ersten Ausführungsbeispiel ein, das heißt, durch das gegenseitige Hintergreifen können sich bei einer oder mehreren Bruchstellen im Radreifen 12 die Bruchstücke nicht radial vom Radhauptkörper 10 lösen und werden von ihm weiterhin festgehalten, so daß ein Entgleisen des Zugs nicht möglich ist.

Es ist selbstverständlich auch möglich, in einer einfacheren Version nur ein einziges Hintergreifen von ringförmigenm Bereichen vorzusehen, beispielsweise sind dann im ersten Ausführungsbeispiel nur ein ringförmiger Bereich 24 und ein damit zusammenwirkender ringförmiger Bereich 27 möglich. Andererseits ist es auch möglich, bei einer noch sichereren Ausführungsform sowohl die ringförmigen Bereiche 24, 25, 27 als auch die ringförmigen Bereiche 44, 45, 47 vorzusehen.

Die ringförmigen Bereiche können eine praktisch beliebige Gestalt aufweisen, wobei lediglich von Bedeutung ist, daß ein Ineinandergreifen in axialer Richtung bzw. ein Hintergreifen realisiert ist.

Anstelle eines Radhauptkörpers 10 und eines Halterings 20 kann prinzipiell auch ein anders gestalteter zweiteiliger Radkörper vorgesehen sein. Dabei können auch andere Mittel zur Verhinderung einer axialen Verschiebung des Radreifens auf dem Radhauptkörper vorgesehen sein, beispielsweise eine andere Schräge der Anlageflächen 15, 16, 18, 19 im ersten Ausführungsbeispiel oder anders gestaltete Anlageflächen, die prinzipiell nur eine radiale Verzahnung zwischen Radreifen 12 und Radhauptkörper 10 bewirken müssen.

In einer einfacheren Ausführungsform können auch die Federelemente 17, 37 entfallen, wodurch dann zwar das komfortable Laufverhalten entfällt, jedoch immer noch der Vorteil verbleibt, daß der Radhauptkörper bestehen bleiben kann, wenn der Radreifen ausgewechselt wird. In diesem Falle entfallen selbstverständlich die Spalte 28, 48.

In einer weiteren Ausgestaltung der Erfindung ist es auch möglich, Sensoren im Rad vorzusehen, die einen Bruch des Radreifens 12 beispielsweise drahtlos einer Überwachungseinrichtung melden. In einem solchen Falle kann der Zug trotz gebrochenem Radreifen 12 mit verminderter Geschwindigkeit bis zu einer Reparaturstelle weiterbewegt werden.

Der Haltering 20, 40 kann in einer Abwandlung der Erfindung auch mehrstückig ausgebildet sein, beispielsweise in Form von Haltesegmenten oder -elementen. Er kann eine formschlüssige Verbindung zum Radhauptköprer aufweisen, z. B. in Form von Klauen, ineinandergreifenden Ringelementen, Buchsen, Hülsen, Stiften od.dgl.

## Patentansprüche

1. Rad für Schienenfahrzeuge, mit einer an einer Radachse fixierbaren Radkörperanordnung (10, 20), die am Radumfang koaxial von einem Radreifen umgriffen wird, der zum Abrollen auf Schienen ausgebildet ist, wobei Mittel zur Verhinderung einer axialen Verschiebung des Radreifens (12) auf der Radkörperanordnung vorgesehen sind, **dadurch gekennzeichnet, dass** zur Verhinderung einer radial nach außen gerichteten Bewegung des Radreifens (12; 32) dieser und die Radköperanordnung ringartig umlaufende Bereiche (24, 25, 27; 44, 45, 47) aufweisen, die in axialer Richtung ineinander greifen und sich in radialer Richtung hintergreifen.

2. Rad nach Anspruch 1, **dadurch gekennzeichnet, dass** die Radköperanordnung wenigstens zweiteilig ausgebildet ist.

3. Rad nach Anspruch 2, **dadurch gekennzeichnet, dass** die Radkörperanordnung (10, 20; 30, 40) lösbar miteinander verbunden, insbesondere miteinander verschraubbar sind.

4. Rad nach Anspruch 2 oder 3 , **dadurch gekennzeichnet, daß** wenigstens eines, insbesondere jedes Radkörperteil (10, 20; 30, 40) mit einem oder mehreren, ringartig umlaufenden Bereichen (24, 25; 44, 45) versehen ist, der oder die axial einen oder mehrere entsprechende, ringartig umlaufende Bereiche (27; 47) des Radreifens (12; 32) hintergreifen.

5. Rad nach Anspruch 4, **dadurch gekennzeichnet, daß** die ringartig umlaufenden Bereiche (24, 25, 27; 44, 45, 47) an wenigstens einer Radaußenseite und/oder im Inneren des Rades im mittleren Bereich angeordnet sind.

6. Rad nach Anspruch 5, **dadurch gekennzeichnet, daß** die ringartig umlaufenden Bereiche (24, 25, 27; 44, 45, 47) paarweise symmetrisch angeordnet sind.

7. Rad nach einem der Ansprüche 1 bis 6, **dadurch gekennzeichnet, daß** ein erstes Radkörperteil (10; 30) der Radkörperanordnung als an der Radachse fixierbarer Radhauptkörper und wenigstens ein zweites Radkörperteil (20; 40) als axial am ersten Radkörperteil (10; 30) aufschiebbarer ein- oder mehrteiliger Haltering ausgebildet ist.

8. Rad nach Anspruch 7, **dadurch gekennzeichnet, daß** das als Haltering ausgebildete zweite Radkörperteil (20; 40) durch einen Kranz von Halteschrauben (21; 41) am ersten Radkörperteil (10; 30) fixiert ist.

9. Rad nach einem der Ansprüche 2 bis 8, **dadurch gekennzeichnet, daß** zur Verhinderung einer axialen Verschiebung des Radreifens (12; 32) die Radkörperteile (10, 20; 30, 40) und die gegenüberliegende Innenseite des Radreifens (12; 32) zur axialen Richtung im wesentlichen symmetrisch abgewinkelte schräge Anlageflächen (15, 16, 18, 19; 35, 36, 38, 39) aufweisen.

10. Rad nach einem der Ansprüche 2 bis 9, **dadurch gekennzeichnet, daß** zwischen dem Radreifen (12; 32) und den Radkörperteilen (10, 20; 30, 40) gummielastische Federelemente (17; 37) angeordnet sind, wobei die ringartig umlaufenden Bereiche (24, 25, 27; 44, 45, 47) durch einen eine elastische Relativbewegung zulassenden Spalt (28; 48) voneinander getrennt sind.

11. Rad nach Anspruch 10, **dadurch gekennzeichnet, daß** die gummielastischen Federelemente (17; 37) an den schrägen Anlageflächen (15, 16, 18, 19; 35, 36, 38, 39) flächig anliegen.

12. Rad nach Anspruch 10 oder 11, **dadurch gekennzeichnet, daß** die Federelemente (17, 37) als Ringbänder oder Einzelelemente ausgebildet sind.

13. Rad nach einem der vorhergehenden Ansprüche, **dadurch gekennzeichnet, daß** der Radreifen (12; 32) und die Radkörperteile (10, 20; 30, 40) aus Stahl bestehen.

## Claims

1. Wheel for rail vehicles, with a wheel body assembly (10, 20) capable of being fixed to a wheel axle and which is coaxially encompassed at the wheel periphery by a wheel tyre designed for rolling on rails, wherein means are provided to prevent axial displacement of the wheel tyre (12) on the wheel body assembly, **characterised in that**, to prevent a radially outwards directed movement of the wheel tyre (12; 32), the latter and the wheel body assembly have annular circumferential areas (24, 25, 27; 44, 45, 47) which engage in one another in the axial direction and engage from behind in the radial direction.

2. Wheel according to claim 1, **characterised in that** the wheel body assembly is made in at least two sections.

3. Wheel according to claim 2, **characterised in that** the wheel body assembly (10, 20; 30, 40) is releasably connected and in particular may be bolted together.

4. Wheel according to claim 2 or 3, **characterised in that** at least one and in particular each wheel body part (10, 20; 30, 40) is provided with one or more annular, circumferential areas (24, 25; 44, 45), which engages or engage axially behind one or more corresponding annular, circumferential areas (27; 47) of the wheel tyre (12; 32).

5. Wheel according to claim 4, **characterised in that** the annular, circumferential areas (24, 25, 27; 44, 45, 47) are located in the centre section on one or more outer sides of the wheel and/or inside the wheel.

6. Wheel according to claim 5, **characterised in that** the annular, circumferential areas (24, 25, 27; 44, 45, 47) are arranged symmetrically in pairs.

7. Wheel according to any of claims 1 to 6, **characterised in that** a first wheel body part (10; 30) of the wheel body assembly is designed as main body of the wheel for fixing to the wheel axle, and at least a second wheel body part (20; 40) is in the form of a single or multiple part retaining ring which may be slid axially on to the first wheel body part (10; 30).

8. Wheel according to claim 7, **characterised in that** the second wheel body part (20; 40) in the form of a retaining ring is fixed to the first wheel body part (10; 30) by a ring of retaining bolts (21; 41).

9. Wheel according to any of claims 2 to 8, **characterised in that** to prevent axial displacement of the wheel tyre (12; 32), the wheel body parts (10, 20; 30, 40) and the opposite inner side of the wheel tyre (12; 32) have inclined contact faces (15, 16, 18, 19; 35, 36, 38, 39) angled substantially symmetrically relative to the axial direction.

10. Wheel according to any of claims 2 to 9, **characterised in that** rubber-elastic spring elements (17; 37) are located between the wheel tyre (12; 32) and the wheel body parts (10, 20; 30, 40), wherein the annular circumferential areas (24, 25, 27; 44, 45, 47) are separated from one another by a gap (28; 48) which allows elastic relative movement.

11. Wheel according to claim 10, **characterised in that** the rubber-elastic spring elements (17; 37) lie flush against the inclined contact faces (15, 16, 18, 19; 35, 36, 38, 39).

12. Wheel according to claim 10 or 11, **characterised in that** the spring elements (17, 37) are in the form of annular bands or separate elements.

13. Wheel according to any of the preceding claims, **characterised in that** the wheel tyres (12; 32) and the wheel body parts (10, 20; 30, 40) are made of steel.

## Revendications

1. Roue pour véhicules ferroviaires, comportant un agencement de corps de roue (10, 20) pouvant être fixé sur une axe de roue, lequel est entouré coaxialement, sur le pourtour de la roue, par un pneu de roue qui est conçu pour rouler sur des rails, des moyens étant prévus pour empêcher un déplacement axial du pneu de roue (12) sur l'agencement de corps de roue, **caractérisée en ce que** pour empêcher un mouvement, dirigé radialement vers l'extérieur, du pneu de roue (12 ; 32), ce dernier et l'agencement de corps de roue présentent des zones (24, 25, 27 ; 44, 45, 47) périphériques de type anneau qui s'engagent les unes dans les autres dans la direction axiale et passent les unes derrière les autres dans la direction radiale.

2. Roue selon la revendication 1, **caractérisée en ce que** l'agencement de corps de roue est réalisé au moins en deux parties.

3. Roue selon la revendication 2, **caractérisée en ce que** les parties de l'agencement du corps de roue (10, 20 ; 30, 40) sont reliées entre elles de manière séparable, en particulier peuvent être vissées entre elles.

4. Roue selon la revendication 2 ou 3, **caractérisée en ce qu'**au moins une, en particulier chaque partie du corps de roue (10, 20 ; 30, 40) est pourvue d'une ou plusieurs zones (24, 25 ; 44, 45) périphériques de type anneau, qui passent axialement derrière une ou plusieurs zones (27 ; 47) périphériques de type anneau correspondantes du pneu de roue (12 ; 32).

5. Roue selon la revendication 4, **caractérisée en ce que** les zones (24, 25, 27 ; 44, 45, 47) périphériques de type anneau sont disposées sur au moins un côté extérieur de la roue et/ou à l'intérieur de la roue, dans la zone centrale.

6. Roue selon la revendication 5, **caractérisée en ce que** les zones (24, 25, 27 ; 44, 45, 47) périphériques de type anneau sont disposées symétriquement deux par deux.

7. Roue selon les revendications 2 à 6, **caractérisée en ce qu'**une première partie du corps de roue (10 ; 30) de l'agencement de corps de roue est réalisée en tant que corps principal de roue pouvant être fixé sur l'axe de la roue et au moins une deuxième partie de roue (20 ; 40) est réalisée en tant qu'anneau de maintien en une ou plusieurs parties à enfiler axialement sur la première partie du corps de roue (10 ; 30).

8. Roue selon la revendication 7, **caractérisée en ce que** la deuxième partie du corps de roue (20 ; 40) réalisée en tant qu'anneau de maintien est fixée, par une couronne de vis de maintien (21 ; 41), sur la première partie du corps de roue (10 ; 30).

9. Roue selon l'une des revendications 2 à 8, **caractérisée en ce que** pour empêcher un déplacement axial du pneu de roue (12 ; 32), les parties du corps de roue (10, 20 ; 30, 40) et le côté intérieur opposé du pneu de roue (12 ; 32) présentent des surfaces de contact (15, 16, 18, 19 ; 35, 36, 38, 39) obliques, coudées sensiblement symétriquement par rapport à la direction axiale.

10. Roue selon l'une des revendications 2 à 9, **caractérisée en ce qu'**entre le pneu de roue (12 ; 32) et les parties du corps de roue (10, 20 ; 30, 40) sont disposés des éléments à ressort (17 ; 37) présentant l'élasticité du caoutchouc, les zones (24, 25, 27 ; 44, 45, 47) périphériques de type anneau étant séparées les unes des autres par une fente (28 ; 48) autorisant un mouvement relatif élastique.

11. Roue selon la revendication 10, **caractérisée en ce que** les éléments à ressort (17 ; 37) présentant l'élasticité du caoutchouc s'appliquent à plat contre les surfaces de contact (15, 16, 18, 19 ; 35, 36, 38, 39) obliques.

12. Roue selon la revendication 10 ou 11, **caractérisée en ce que** les éléments à ressort (17, 37) sont réalisés sous la forme de bandes annulaires ou d'éléments individuels.

13. Roue selon l'une des revendications précédentes, **caractérisée en ce que** le pneu de roue (12 ; 32) et les parties du corps de roue (10, 20 ; 30, 40) sont en acier.
